(19) Europäisches Patentamt
European Patent Office
Office européen des brevets

(11) Veröffentlichungsnummer: **0 044 901**
**B1**

(12) **EUROPÄISCHE PATENTSCHRIFT**

(45) Veröffentlichungstag der Patentschrift:
12.12.84

(51) Int. Cl.³: **F 16 K 11/06,** F 16 K 19/00

(21) Anmeldenummer: **81101045.3**

(22) Anmeldetag: **14.02.81**

(54) **Mischventil zur Steuerung eines Wasserstromes.**

(30) Priorität: **26.07.80 DE 3028408**

(43) Veröffentlichungstag der Anmeldung:
**03.02.82 Patentblatt 82/5**

(45) Bekanntmachung des Hinweises auf die Patenterteilung:
**12.12.84 Patentblatt 84/50**

(84) Benannte Vertragsstaaten:
**BE FR GB IT NL SE**

(56) Entgegenhaltungen:
**DE - A - 2 738 461**
**DE - A - 2 756 784**
**DE - A - 2 827 236**
**DE - B - 1 550 060**
**US - A - 3 476 149**
**US - A - 3 667 503**
**US - A - 3 938 546**
**US - A - 3 965 936**

(73) Patentinhaber: **IDEAL-STANDARD GMBH, Euskirchener Strasse 80, D-5300 Bonn 1 (DE)**

(72) Erfinder: **Delker, Wilfried, Dipl.-Ing., Panoramastrasse 3a, D-5330 Königswinter (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Mischventil zur Steuerung eines Wasserstromes mit einem einen Auslauf aufweisenden Ventilkörper und mit mindestens zwei aufeinanderliegenden keramischen Steuerscheiben, von denen eine als Ventilscheibe ausgebildet und auf einer feststehenden Ventilsitzscheibe verschiebbar ist, die Wassereinlaßöffnungen besitzt, mit Abdichtung parallel zu einer Wassereinlaßbohrungen aufweisenden Anschlußfläche des Ventilkörpers angeordnet ist und sich ebenso wie die mit den Wassereinlaßöffnungen über einen seitlich offenen Umlenkkanal zusammenwirkende Ventilscheibe in einer zum Auslauf führenden Mischkammer befindet, die durch einen gegenüber dem Ventilkörper abgedichteten Deckel verschlossen ist, der gleichzeitig zur axialfesten Lagerung für einen Betätigungsfinger ausgestaltet ist, dessen oberes Ende mit einem Ventilhebel in Verbindung steht, während sein unteres Ende in eine Ausnehmung auf der Oberseite der sich direkt oder indirekt über eine Dichtung an dem Deckel abstützenden Ventilscheibe eingreift.

Bestimmte mit keramischen Steuerscheiben ausgerüstete Ventile haben sich in der Praxis bestens bewährt. Die Ventile lassen sich noch nach vielen Jahren sehr leicht bedienen, und sie gewährleisten eine gleichbleibend sichere Funktion. Solche Ventile sind z. B. bekannt aus den DE-B-1 550 060 und DE-B-1 949 318. Bei den darin beschriebenen und dargestellten Mischventil-Ausführungen strömt das Wasser über zwei in der feststehenden Ventilsitzscheibe befindliche Einlaßöffnungen in eine Umlenkkammer der beweglichen Ventilscheibe. Diese Umlenkkammer ist nur zur Ventilsitzscheibe hin offen. Das Wasser strömt daher von der Umlenkkammer direkt zu einer ebenfalls in der Ventilsitzscheibe befindlichen Auslaßöffnung. Der Aufnahmeraum des Ventilkörpers für die Steuerelemente ist somit nicht vom Wasser durchströmt, und er braucht also nicht wasserdicht verschlossen zu sein. Eine noch nach vielen Jahren einwandfreie Funktion bei mit keramischen Scheiben ausgerüsteten Mischventilen setzt aber insbesondere voraus, daß auch sonstige Dichtelemente aus z. B. elastischem Material weitgehendst verschleißfrei belastet sind. Diese Voraussetzung ist bei den genannten Mischventilen nach den DE-AS 1 550 060 und 1 949 318 erfüllt. Wegen der besonders vorteilhaften Konstruktion benötigen diese Mischventile nämlich nur noch statisch belastete Dichtungen aus Gummi od. dgl. zwischen der Ventilsitzscheibe und der Anschlußfläche des Ventilkörpers.

Bei Mischventilen der anmeldungsgemäßen Gattung, die für die Auslegung der Wasserwege einen größeren Spielraum bieten, ist der Aufnahmeraum des Ventilkörpers für die Steuerelemente von Wasser durchströmt. Er muß also wasserdicht verschlossen sein. Dabei ergeben sich besondere Abdichtungsprobleme, die bei den bisher bekannten Mischventilen dieser Gattung nicht befriedigend gelöst worden sind.

Mischventile dieser Art sind z. B. in der kanadischen Patentschrift CA-A-1 047 363 offenbart. Dabei stützt sich die bewegliche Dichtscheibe über eine elastische Ringdichtung direkt an dem Deckel ab. Ein erheblicher Nachteil bei Ausführungen dieser Art ist darin zu sehen, daß die Dichtung dynamisch belastet ist und einem erheblichen Verschleiß unterliegt. Es hat sich in der Praxis gezeigt, daß selbst bei gut gefetteten dynamischen Dichtungen aus hochwertigem Gummi od. dgl. nach einiger Zeit ein erhöhter Verschleiß eintritt, insbesondere bei sehr kalkhaltigem Wasser, so daß die Gefahr von Undichtigkeiten besteht. Bei Ventilen der anmeldungsgemäßen Gattung würden solche Undichtigkeiten dazu führen können, daß beim Betrieb Wasser oben aus dem Ventil regelrecht herausspritzt.

Ferner sind gemäß der deutschen Offenlegungsschrift DE-A-2 827 236 (entspricht dem DE-U-7 818 627) Mischarmaturen der eingangs genannten Art bekannt, die gekennzeichnet sind durch eine von wenigstens zwei Zutrittsöffnungen durchsetzte, feststehende erste Scheibe, durch eine relativ zur ersten Scheibe verdrehbare, mit den Öffnungen derselben zusammenwirkende und Durchlässe aufweisende zweite Scheibe sowie durch eine relativ zur zweiten Scheibe in Richtung einer Verbindungslinie zwischen den Mittelpunkten der Durchlässe derselben linear verschiebliche dritte Scheibe, welche wenigstens zwei mit denen der zweiten Scheibe zusammenwirkende Durchlässe aufweist. Dabei ist die dritte Scheibe über einen mittig angeordneten Zapfen bewegungsübertragend mit einem Mischkopf verbunden. Der Mischkopf ist kulissenartig an einem drehbaren Steuerkopf geführt, welcher eine in einem Deckel gehaltene Lagerung für einen Betätigungsfinger bildet. Der Steuerkopf ist abdichtend in dem Deckel gelagert und trägt eine Ringdichtung, welche sich in abdichtender Anlage am Mischkopf befindet und diesen elastisch abwärts belastet, so daß die drei Verteilerscheiben in satter gegenseitiger Anlage gehalten sind, und sich das so gebildete Scheibenpaket indirekt über den Mischkopf und die Ringdichtung an dem Steuerkopfteil des Deckels abstützt. Auch bei dieser Konstruktion ist die Ringdichtung zwischen dem Deckel und dem Scheibenpaket wegen der Verschiebbarkeit des mit der dritten Scheibe eine Baueinheit bildenden Mischkopfes dynamisch belastet und einem entsprechend hohen Verschleiß ausgesetzt, wodurch sich die bereits geschilderten Gefahren ergeben.

Nicht anders sind die Verhältnisse bei Ausführungen z. B. gemäß der DE-A-2 756 784 (entspricht dem DE-U-7 738 802).

Nach der US-A-3 476 149 ist ein Mischventil mit einer keramischen Scheibe vorgesehen, die unter Zwischenschaltung von Stützteilen (seat parts) gegenüber einem Deckel gelagert ist und auf ihrer anderen Seite an einer beweglichen Ventilplatte anliegt, hierbei aber keine Dichtfunktionen ausübt und auch nicht ausüben braucht, da das Wasser bei geöffnetem Ventil über Öffnungen in einer Ventilsitzplatte in einen Plattenausschnitt bzw. Umlenkkanal (plate recess) einfließt und von diesem umgelenkt, aus einer der Öffnungen wieder abfließt. Somit kann bei diesem Ventil das Wasser gar nicht über den Umlenkkanal hinaus nach außen gelangen, so daß die keramische Scheibe keine Dichtfunktionen gegenüber der beweglichen Ventilplatte ausübt. Hierbei ist unstrittig, daß

a) die keramische Scheibe gegenüber einem der Stützteile (seat part) und auch gegenüber einem umfassenden Gehäuseteil (cup) gemäß der US-A-3 476 149 nicht abgedichtet ist,

b) beim Mischventil nach der CA-A-1 047 363 verschleißempfindliche dynamische Dichtungen benötigt werden,

c) bei der US-A-3 476 149 die Umlenkkammer relativ klein vorgesehen ist, und daher ein Druckverlust entsteht,

d) das Mischwasser gemäß der US-A-3 476 149 um 180° zum Auslaß umgelenkt werden muß, da die Umlenkkammer seitlich verschlossen ist, wodurch eine sehr geräuschintensive Ausführung vorliegt, und ferner ebenfalls ein Druckverlust entsteht.

Der Erfindung liegt die Aufgabe zugrunde, diese Nachteile zu beseitigen und ein Mischventil der eingangs genannten Art zu schaffen, welches einfach im Aufbau und sicher in der Wirkungsweise ist.

Erreicht ist dieses Ziel in vorteilhafter Weise im wesentlichen dadurch, daß zwischen dem Deckel und der Ventilscheibe eine feststehende keramische Dichtscheibe vorgesehen ist, die unter Zwischenschaltung einer statischen Dichtung entweder gegenüber dem Deckel oder dem Ventilkörper abgedichtet ist und sich auf ihrer einen Seite an dem Deckel abstützt, während die andere Seite als polierte Dichtfläche ausgebildet ist, an der die Ventilscheibe mit einer entsprechenden Dichtfläche anliegt.

Erfindungsgemäß stützt sich die bewegliche Ventilscheibe nicht mehr über eine dynamisch belastete Ringdichtung od. dgl. aus z. B. Gummi an dem Deckel ab, sondern sie liegt unmittelbar in abdichtender Anlage an einer feststehenden keramischen Dichtscheibe. Die nur statisch belastete Ringdichtung zwischen der Dichtscheibe und dem Deckel oder zwischen der Dichtscheibe und dem Ventilkörper hat eine sehr lange Lebensdauer. Nach alledem ist eine erfindungsgemäße Abdichtung den vorbekannten Ausführungen weit überlegen.

Weitere Vorteile sind im Einzelnen darin zu sehen, daß

b) eine große Mischkammer vorhanden ist, wodurch dem Wasser ein geringerer Gegendruck entgegensteht,

c) sich in dieser Mischkammer eine Dichtscheibe, eine Ventildichtscheibe und eine Ventilsitzscheibe befinden,

d) die Mischkammer durch nicht verschleißbehaftete Abdichtungen abgedichtet ist,

e) der Umlenkkanal zur besseren Wasserabströmung seitlich offen gehalten ist, und daher das Mischwasser nur um 90° umgelenkt werden muß, und aus diesem Grunde die Funktionsweise der Erfindung sehr geräuschreduziert ist,

f) aufgrund der erfindungsgemäßen Ausführung nur eine Seite der Dichtscheibe als polierte Dichtfläche ausgebildet werden braucht.

Gemäß einem ausgestaltenden Merkmal der Erfindung ist die der Dichtscheibe zugewandte Dichtfläche der Ventilscheibe nur auf einer schmalen umlaufenden Erhöhung vorgesehen, um den Kostenaufwand für die Bearbeitung der Scheibenoberflächen möglichst gering zu halten.

In der Zeichnung ist der Erfindungsgegenstand in zwei Ausführungsbeispielen dargestellt; und zwar zeigt

Fig. 1 ein erfindungsgemäßes Mischventil im Längsschnitt, bei dem die wesentlichen Steuerteile baueinheitlich in einem kartuschenartigen Zusatzteil vereinigt und insgesamt aus dem Ventilkörper herausnehmbar sind, und

Fig. 2 ein erfindungsgemäßes Mischventil im Längsschnitt, bei dem die Steuerteile einzeln aus dem Ventilkörper herausnehmbar sind.

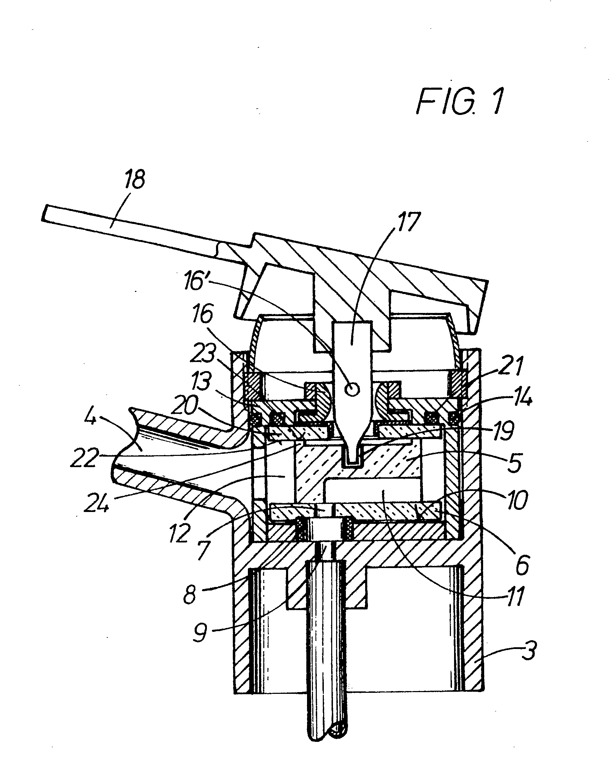

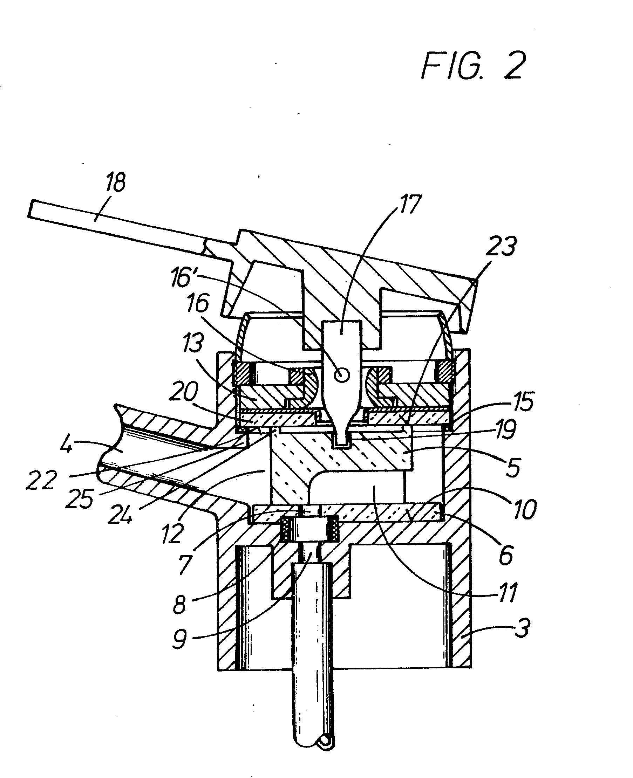

Darin ist mit 3 ein Ventilkörper bezeichnet, der mit einem Auslauf 4 versehen ist. Für die Steuerung des Wasserstromes sind zwei Keramikscheiben 5 und 6 vorgesehen, von denen eine als Ventilscheibe 5 ausgebildet und auf einer feststehenden Ventilsitzscheibe 6 verschiebbar ist, die Wassereinlaßöffnungen 7 besitzt und mit Abdichtung (bei 8) parallel zu einer Wassereinlaßbohrungen 9 aufweisenden Anschlußfläche 10 des Ventilkörpers 3 angeordnet ist. Die Ventilsitzscheibe 6 befindet sich ebenso wie die mit den Wassereinlaßöffnungen 7 über einen seitlich offenen Umlenkkanal 11 zusammenwirkende Ventilscheibe in einer zum Auslauf 4 führenden Mischkammer 12. Die Mischkammer 12 ist oben durch einen Deckel 13 begrenzt, der gegenüber dem Ventilkörper 3 direkt (Fig. 1) oder indirekt (Fig. 2) über elastische Ringdichtungen 14 bzw. 15 statisch abgedichtet ist. Der Deckel 13 ist gleichzeitig zur axialen festen Lagerung (Drehring 16 mit Achse 16') für einen Betätigungsfinger 17 ausgestaltet, dessen oberes Ende mit einem Ventilhebel 18 in Verbindung steht, während sein unteres Ende in eine Ausnehmung 19 auf der Oberseite der Ventilscheibe 5 eingreift.

Wie ersichtlich befindet sich zwischen dem Deckel 13 und der Ventilscheibe 5 eine feststehende Dichtscheibe 20. Die Dichtscheibe 20 besteht ebenfalls aus Keramik, und sie stützt sich mit ihrer einen Seite z. B. unter Zwischenschaltung einer statischen Gummi-Ringdichtung 21 (bei Ausführung nach Fig. 1) an dem Deckel 13 ab. Die andere Seite der Dichtscheibe 20 ist als polierte Dichtfläche 22 ausgebildet, an der die Ventilscheibe 5 mit einer entsprechenden Dichtfläche 23 anliegt. Die Dichtfläche 23 befindet sich auf einem rippenförmig erhöhten Rand 24. Bei der Ausführung nach Fig. 2 ist eine Dichtung zwischen dem Deckel 13 und der Dichtscheibe 5 nicht erforderlich, da diese gegenüber dem Ventilkörper 3 mittels der Dichtung 15 abgedichtet ist, die auf einem Absatz 25 ruht.

Sowohl bei der Ausführung nach Fig. 1 als auch bei derjenigen nach Fig. 2 erfolgt die Verbindung der Steuerteile mit dem Ventilkörper mittels eines Schraubringes 25.

Die Funktion von Mischventilen der anmeldungsgemäßen Gattung ist hinreichend bekannt, so daß hierzu ins Detail gehende Erläuterungen nicht erforderlich sind. Die Funktionsweise wird deshalb nur kurz beschrieben. Wird der Ventilhebel 18 nach oben oder unten bewegt, so werden die hintereinander Einlaßöffnungen 7 in der Ventilsitzscheibe 6 für das kalte und warme Wasser mittels der Ventilscheibe 5 mehr oder weniger freigegeben oder geschlossen. Die Ventilscheibe 5 wird bei der genannten Hebelbewegung linear verschoben, wodurch eine Mengenregulierung erfolgt. Wenn dagegen der Ventilhebel 18 nach links oder rechts geschwenkt wird, dann erfolgt eine Drehbewegung der Ventilscheibe und damit die Temperatursteuerung.

Wie bereits erwähnt, sind die dargestellten und beschriebenen Ausführungen nur Beispiele zur Verwirklichung der Erfindung, und diese ist nicht darauf beschränkt, vielmehr sind im Rahmen des erfindungsgemäßen Grundgedankens noch mancherlei andere Ausführungsmöglichkeiten gegeben. So ist die Erfindung auch z. B. bei solchen Mischventilen anwendbar, bei denen für die Steuerung des Wasserstromes mehr als zwei Steuerscheiben zum Einsatz kommen. Ferner ist das Einsatzgebiet der Erfindung nicht auf Mischventile beschränkt. Die besondere Art der erfindungsgemäßen Abdichtung kann selbstverständlich auch bei mit entsprechenden Scheibenkonstruktionen ausgerüsteten Einzel-Absperrventilen für nur kaltes oder warmes Wasser zum Einsatz kommen. Ferner ist ein erfindungsgemäßes Ventil natürlich nicht nur in der Sanitärtechnik einsetzbar. Schließlich können die Scheiben auch aus einem nichtkeramischen Material bestehen.

## Patentansprüche

1. Mischventil zur Steuerung eines Wasserstromes mit einem einen Auslauf (4) aufweisenden Ventilkörper (3) und mit mindestens zwei aufeinanderliegenden keramischen Steuerscheiben (5, 6), von denen eine als Ventilscheibe (5) ausgebildet und auf einer feststehenden Ventilsitzscheibe (6) verschiebbar ist, die Wassereinlaßöffnungen (7) besitzt, mit Abdichtung parallel zu einer Wasereinlaßbohrungen (9) aufweisen den Anschlußfläche (10) des Ventilkörpers (3) angeordnet ist und sich ebenso wie die mit den Wassereinlaßöffnungen (7) über einen seitlich offenen Umlenkkanal (11) zusammenwirkende Ventilscheibe (5) in einer zum Auslauf (4) führen den Mischkammer (12) befindet, die durch einen gegenüber dem Ventilkörper (3) abgedichteten Deckel (13) verschlossen ist, der gleichzeitig zur axialen Lagerung für einen Betätigungsfinger (17) ausgestaltet ist, dessen oberes Ende mit einem Ventilhebel (18) in Verbindung steht, während sein unteres Ende in eine Ausnehmung (19) auf der Oberseite der sich direkt oder indirekt über eine Dichtung an dem Deckel abstützenden Ventilscheibe (5) eingreift, dadurch gekennzeichnet, daß zwischen dem Deckel (13) und der Ventilscheibe (5) eine feststehende keramische Dichtscheibe (20) vorgesehen ist, die unter Zwischenschaltung einer statischen Dichtung (15, 21) entweder gegenüber dem Deckel (13) oder dem Ventilkörper (3) abgedichtet ist und sich auf ihrer einen Seite an dem Deckel (13) abstützt, während die andere Seite als polierte Dichtfläche (22) ausgebildet ist, an der die Ventilscheibe (5) mit einer entsprechenden Dichtfläche (23) anliegt.

2. Mischventil nach Anspruch 1, dadurch gekennzeichnet, daß die Dichtfläche (23) der Ventilscheibe auf einer schmalen umlaufenden Erhöhung (24) vorgesehen ist.

## Claims

1. Mixing valve for controlling a water flow with a valve body (5) having a discharge outlet (4) and with at least two ceramic control discs (5, 6) on top of each other, one of which is constructed as a valve discs (5) and can be moved on a fixed valve seat disc (6), which has water inlet apertures (7), is arranged with sealing parallel to a connection surface (10) of the valve body (3) having water inlet bores (9), and also like the valve disc (5) co-operating with the water inlet apertures (7) via a laterally open guide duct (11) is located in a mixing chamber (12) leading to the outlet (4), which mixing chamber is closed by a cover (13) sealed with respect to the valve body (3), which cover is at the same time constructed for the axially secure mounting for an actuation finger (17) the upper end of which connects with a valve lever (18) whilst its lower end engages into a recess (19) on the upper side of the valve disc (5) supported on the cover directly or indirectly by means of a seal, characterised in that between the cover (13) and the valve disc (5) there is provided a fixed ceramic sealing disc (20) which is sealed either with respect to the cover (13) or the valve body (3) by the interposition of a static seal (15, 21), and is supported on the cover (13) on one side, whilst the other side is constructed as a polished sealing surface (22), on which the valve disc (5) lies with a corresponding sealing surface (23).

2. Mixing valve according to claim 1, characterised in that the sealing surface (23) of the valve disc is provided on a narrow encircling raised part (24).

## Revendications

1. Robinet mitigeur, pour régler le débit et la température du débit d'eau à la sortie du robinet; le robinet comportant un corps creux (3) pourvu d'un orifice de sortie (4), et contenant au moins deux disques d'obturation en matière céramique (5, 6), dont l'un (5) constitue un organe d'obturation mobile par rapport à l'autre disque (6) qui constitue un siège d'obturation fixe; le disque fixe (6) étant pourvu à cet effet de deux orifices d'arrivée d'eau (7), et monté parallèlement à une surface de raccordement (10) du corps (3) du robinet, où sont ménagés deux trous d'arrivée d'eau (9), reliés par des joints (8) aux orifices (7) percés dans le disque fixe (6); le disque fixe (6) étant logé ainsi que le disque mobile (5) dans une chambre de mélange (12), qui débouche dans l'orifice de sortie (4) du robinet; le disque mobile (5) présentant un canal latéral de déviation (11), qui coopère avec les deux orifices d'arrivée d'eau (7) du disque fixe (6); la chambre de mélange (12) étant obturée par un couvercle (13), monté de manière étanche sur le corps (3) du robinet, et qui sert à assurer le montage axial tournant d'un doigt d'actionnement (17), ayant sont extrémité supérieure fixée à une manette de commande (18), et son extrémité inférieure engagée dans une cavité ménagée dans la face supérieure du disque d'obturation mobile (5) en appui contre le couvercle, directement, ou indirectement par l'intermédiaire d'un joint; le robinet mitigeur étant caractérisé en ce qu'il comporte un disque d'étanchéité fixe (20), en matière céramique, monté entre le couvercle (13) et le disque d'obturation mobile (5); le disque d'étanchéité fixe (20) étant en appui étanche contre le couvercle (13) , ou contre le corps (3) du robinet, par l'intermédiaire d'un joint statique (15, 21); le disque d'étanchité fixe (20) ayant ainsi l'une de ses faces faces appliquée contre le couvercle (13), tandis que l'autre face du disque fixe (20) constitue une face d'étanchéité polie (22), contre laqeulle est en appui une face d'étanchéité correspondante (23) du disque d'obturation mobile (5).

2. Robinet mitigeur selon la revendication 1, caractérisé en ce que la face d'étanchéité (23) du disque d'obturation mobile (5) est réalisée sur une saillie périphérique de faible hauteur (24) ménagée sur le disque mobile (5).

FIG. 1

FIG. 2